## Europäisches Patentamt
## European Patent Office
## Office européen des brevets

(19)

(11) Veröffentlichungsnummer : **0 185 187 B1**

(12)

# EUROPÄISCHE PATENTSCHRIFT

(45) Veröffentlichungstag der Patentschrift : 07.09.88

(51) Int. Cl.⁴ : **G 01 N 27/90**

(21) Anmeldenummer : 85114152.3

(22) Anmeldetag : 06.11.85

(54) Verfahren und Wirbelstromprüfsonde zur Untersuchung von Schrauben.

(30) Priorität : 19.11.84 DE 3442256

(43) Veröffentlichungstag der Anmeldung : 25.06.86 Patentblatt 86/26

(45) Bekanntmachung des Hinweises auf die Patenterteilung : 07.09.88 Patentblatt 88/36

(84) Benannte Vertragsstaaten : CH DE FR IT LI NL SE

(56) Entgegenhaltungen :
DE-A- 2 817 574
JOURNAL OF PHYSICAL E: SCI. INSTRUM, Band 16, 1983, Seiten 1135-1141, GB; J. BLITZ "Nondestructive testing using electromagnetic instrumentation"

(73) Patentinhaber : Siemens Aktiengesellschaft Berlin und München
Wittelsbacherplatz 2
D-8000 München 2 (DE)

(72) Erfinder : Meier, Werner, Dipl.-Ing.
Geschwister-Scholl-Strasse 1
D-8520 Erlangen (DE)
Erfinder : Friedrich, Edgar
Frankenstrasse 15
D-8521 Möhrendorf (DE)
Erfinder : Modlich, Erich, Dipl.-Ing.
Regnitzstrasse 7
D-8550 Forchheim (DE)

## Beschreibung

Die Erfindung betrifft ein Verfahren zur Untersuchung von Schrauben mit einer Wirbelstromprüfsonde mit mindestens einer von hochfrequentem Wechselstrom durchflossenen Spule, die in einem Isolierstoffkörper angeordnet ist, der mit einer Anlagefläche längs der Gewindegänge der Schraube geführt wird. Sie richtet sich ferner auf eine Wirbelstromprüfsonde zur Ausübung des vorgenannten Verfahrens.

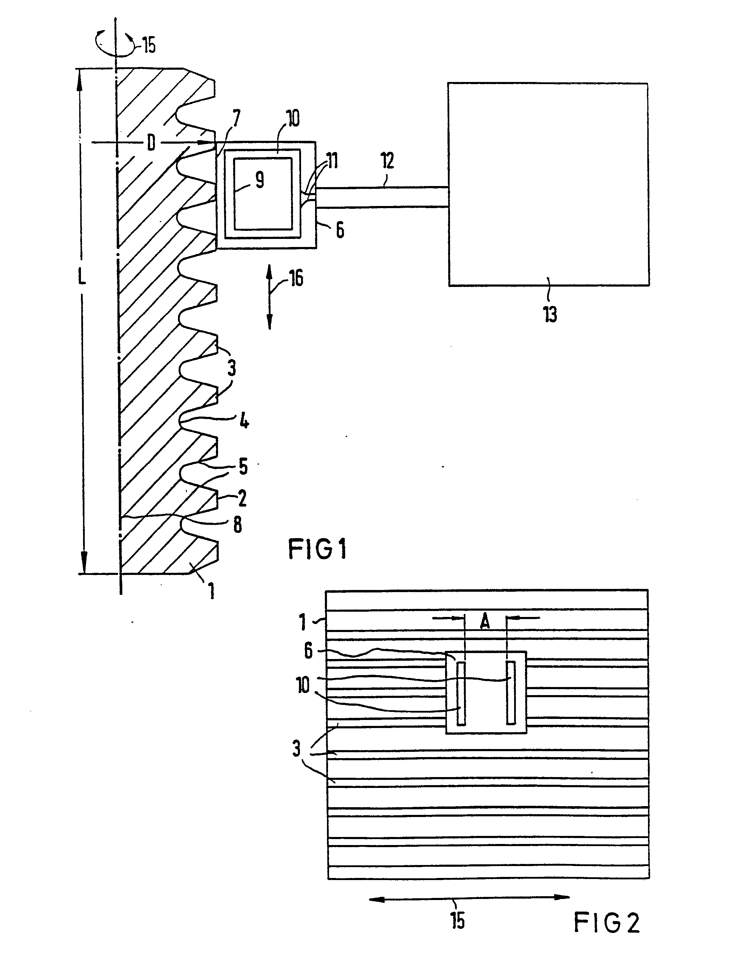

Eine solche Wirbelstromprüfsonde ist aus der deutschen Auslegeschrift 2 817 574 bekannt. Sie wird in der Ausführungsform der Figur 1 zur Prüfung ebener Flächen eingesetzt, wobei der Isolierstoffkörper aus Kunststoff besteht und die Anlagefläche der ebenen Werkstückoberfläche entsprechend eben ausgeführt ist. Der Durchmesser der gleichachsig parallel angeordneten zylindrischen Spulen, die sich rechtwinklig zu der Anlagefläche erstrecken, ist mit 10 mm angegeben, und ihr Abstand soll in der Größenordnung des Durchmessers liegen.

In den Figuren 4 und 5 der DE-AS 2 817 574 ist auch die Prüfung von Einschnitten, wie Gewindegängen, dargestellt. Hierbei liegen die Spulen nicht mehr gleichachsig parallel zueinander, sondern sie sitzen in einer Ebene hintereinander in einem keilförmigen Isolierstoffkörper, der in den Gewindegang eingreift. Für den Durchmesser der Spulen ist ein Wert von 4 bis 5 mm genannt. Ihr Abstand soll 2 mm betragen. Bei der Prüfung werden die Spulen mit dem Isolierstoffkörper in Richtung der Gewindegänge bewegt. Dabei werden insbesondere Fehler im Gewindegrund erfaßt.

Die Erfindung geht demgegenüber von der Aufgabe aus, ein Verfahren der obengenannten Art und die zugehörige Wirbelstromsonde so auszubilden, daß Untersuchungen von Stiftschrauben an Reaktordruckbehältern besonders günstig durchgeführt werden können. Hier sollen Fehler im gesamten Gewindebereich und nicht nur im Gewindegrund der Stiftschrauben sicher lokalisiert werden können. Außerdem wird gegenüber dem Bekannten eine Verringerung der Prüfzeit gewünscht, weil am Reaktordruckbehälter eine hohe Strahlenbelastung die Einsatzzeiten von Überwachungspersonal begrenzt.

Erfindungsgemäß ist ausgehend von einem Verfahren gemäß dem Oberbegriff des Anspruchs 1 vorgesehen, daß zur Untersuchung von Stiftschrauben an Reaktordruckbehältern die mindestens eine Spule quer zu deren Gewindegängen orientiert ist und mit ihrem Feld mindestens zwei Gewindegänge erfaßt und daß der Isolierstoffkörper mit einer ebenen oder dem Gewindeaußendurchmesser der Stiftschrauben entsprechend eindimensional gekrümmten Anlagefläche oberhalb der Gewindegänge geführt wird.

Bei der Erfindung wird eine gleichzeitige Erfassung mehrerer Gewindegänge von Stiftschrauben an Reaktordruckbehältern erzielt, die die Gewindeflanken im ganzen und dennoch mit ausreichender Genauigkeit auch den Gewindegrund erfaßt. Bei Versuchen konnte nachgewiesen werden, daß die den Prüfvorschriften entsprechende sichere Erkennung einer 3 mm tiefen Nut auch bei Anrissen senkrecht zur Spannungsrichtung erreicht wird. Dabei kann die Prüfung der Stiftschrauben in einem Arbeitsgang sowohl über die Gewindeabschnitte als auch über einen Schaft und gegebenenfalls Schaftübergänge erstreckt werden. Dies ergibt eine wesentliche Zeitersparnis gegenüber bisherigen Prüfungen, bei denen für diesen Zweck jeweils verschiedene Wirbelstromprüfsonden benutzt werden. Vorzugsweise wird das neue Verfahren so ausgeführt, daß der Isolierstoffkörper längs Mantellinien an den Stiftschrauben entlang geführt wird und daß die Stiftschrauben dabei gedreht werden.

Die Spulen müssen bei der Erfindung nicht kreisförmig sein. Vielmehr kann man abgeflachte Spulen verwenden, wie sie aus der DE-AS 2 817 574 an sich bekannt sind. Dabei sollte ein geradliniger Abschnitt, der der Anlagefläche benachbart ist, 12 bis 30 mm lang sein. Unter Umständen kann es auch zweckmäßig sein, Spulen mit rechtwinkligem, insbesondere quadratischem Querschnitt zu verwenden.

Der Isolierstoffkörper, der zweckmäßigerweise aus einem gießbaren Kunststoff besteht, ist gemäß dem Anspruch 3 mit seiner Anlagefläche eindimensional gekrümmt und damit dem Umfang der Stiftschrauben angepaßt. Man kann aber zur Durchführung des Verfahrens auch eine ebene Anlagefläche verwenden, damit die Sonde für Stiftschrauben mit unterschiedlichem Durchmesser eingesetzt werden kann.

Zur näheren Erläuterung der Erfindung wird anhand der beiliegenden Zeichnung ein Ausführungsbeispiel beschrieben. Dabei ist in der Fig. 1 eine Seitenansicht und in Fig. 2 eie Abwicklung einer Stiftschraube bei der erfindungsgemäßen Prüfung schematisch vereinfacht angedeutet.

Prüfobjekt ist eine Stiftschraube 1, wie sie zur Befestigung des Deckels an Reaktordruckbehältern dient. Sie hat einen Durchmesser D von zum Beispiel 220 mm und eine Länge L von zum Beispiel 2500 mm. In ihrem zylindrischen Mantel 2 sind die Gewindegänge 3 eines Gewindes M 220 × 8 eingearbeitet, bei dem der Gewindegrund 4 und die Zahnflanken 5 für die Prüfung auf Unversehrtheit besonders wichtig sind.

Zur Wirbelstromprüfung der Stiftschraube 1 dient eine Prüfsonde 6. Dies ist ein quaderförmiger Kunststoffkörper mit quadratischem Querschnitt, dessen Kantenlänge zum Beispiel 50 mm beträgt. Der aus Plexiglas oder Tetrafluorethylen bestehende Kunststoffkörper bildet eine der Stiftschraube 1 zugekehrte Anlagefläche 7 als eine Zylinderfläche von 50 × 50 mm. Diese mit einem Krümmungsradius von 110 bis 112 mm eindimensional gekrümmte Fläche ist, wie man sieht, parallel zur Achse 8 der Stiftschraube orientiert und berührt die zylindrische Hüllfläche des Gewindes im Bereich eines Spulenabschnittes 9 längs einer Mantellinie.

Der geradlinige Spulenabschnitt 9 gehört zu zwei Wirbelstromspulen 10 mit quadratischem Querschnitt, die in dem Kunststoffkörper 6 parallel nebeneinander eingebunden sind. Die Kantenlänge des quadratischen Querschnitts beträgt 25 mm. Dies gilt somit auch für den der Anlagefläche 7 benachbarten geradlinigen Abschnitt 9, so daß das magnetische Feld der Spulen 10 beim Ausführungsbeispiel drei benachbarte Gewindegänge 3 erfaßt. Dabei bestehen die Spulen aus vielen Windungen eines zum Beispiel 0,05 bis 0,5 mm dicken Kupferdrahtes. Die Spulen 10 sind, wie die Fig. 2 zeigt, in einem Abstand A voneinander angeordnet, der in der Größe der Spulenweite liegt. Ihre Anschlußleitungen 11 führen aus dem Isolierstoffkörper 6 zu einem gemeinsamen Anschlußkabel 12, das die Verbindung mit einem Wirbelstromprüfgerät 13 herstellt.

Bei der Wirbelstromprüfung wird eine der beiden Spulen 10 mit hochfrequentem Wechselstrom von zum Beispiel 25 oder 100 kHz gespeist. Im Wirbelstromprüfgerät werden dann die durch magnetische Kopplung über die Schraube 1 erzielten Spannungen in der anderen Spule ausgewertet, wie an sich bekannt ist. Dabei führt die Stiftschraube 1 eine Drehbewegung um ihre Schraubenachse 8 durch, wie durch den Pfeil 15 angedeutet ist. Gleichzeitig wird der Prüfkörper 6 parallel zur Schraubenachse 8 verschoben, wie durch den Pfeil 16 angedeutet ist. Daraus ergibt sich eine schraubenlinienförmige Prüfbahn, bei der in einem Arbeitsgang mehrere Gewindegänge des Gewindes von der Gewindeaußenkante bis zum Gewindegrund 4 erfaßt werden.

Mit der neuen Prüfsonde können außer dem Gewindebereich auch Zylinderschaftbereiche und Übergangsstücke an Stiftschrauben für Reaktordruckbehälter in einem einzigen Arbeitsgang geprüft werden. Im Vergleich zu bisherigen Prüfungen ergibt sich eine Reduzierung der Prüfzeit auf weniger als die Hälfte. Dies ist angesichts der Strahlenbelastung im Bereich des Reaktordruckbehälters eine wesentliche Verbesserung.

**Patentansprüche**

1. Verfahren zur Untersuchung von Schrauben mit einer Wirbelstromprüfsonde mit mindestens einer von hochfrequentem Wechselstrom durchflossenen Spule (10), die in einem Isolierstoffkörper (6) und quer zu dessen Anlagefläche (7) angeordnet ist, wobei diese Anlagefläche (7) längs der Gewindegänge (3) der Schraube (1) geführt wird, dadurch gekennzeichnet, daß zur Untersuchung von Stiftschrauben (1) an Reaktordruckbehältern die mindestens eine Spule (10) quer zu deren Gewindegängen (3) orientiert ist und mit ihrem Feld mindestens zwei Gewindegänge (3) erfaßt und daß der Isolierstoffkörper (6) mit seiner ebenen oder dem Gewindeaußendurchmesser der Stiftschrauben (1) entsprechend eindimensional gekrümmten Anlagefläche (7) oberhalb der Gewindegänge (3) geführt wird.

2. Verfahren nach Anspruch 1, dadurch gekennzeichnet, daß der Isolierstoffkörper (6) längs Mantlinien an den Stiftschrauben (1) entlang geführt wird und daß die Stiftschrauben (1) dabei gedreht werden.

3. Wirbelstromprüfsonde zur Untersuchung von Schrauben mit mindestens einer von hochfrequentem Wechselstrom durchflossenen Spule (10), die in einem Isolierstoffkörper (6) und quer zu dessen Anlagefläche (7) angeordnet ist, und zur Ausübung des Verfahrens nach Anspruch 1 oder 2, dadurch gekennzeichnet, daß die Anlagefläche (7) des Isolierstoffkörpers (6) dem gewindeaußendurchmesser der Stiftschrauben (l) entsprechend eindimensional gekrümmt ist.

4. Wirbelstromprüfsonde nach Anspruch 3, dadurch gekennzeichnet, daß die mindestens eine Spule (10) in der Nähe der Anlagefläche (7) eine Weite von 12 mm bis 30 mm hat.

5. Wirbelstromprüfsonde nach Anspruch 3 oder 4, dadurch gekennzeichnet, daß die mindestens eine Spule (10) in der Nähe der Anlagefläche (7) einen im wesentlichen geradlinigen Abschnitt (9) aufweist.

6. Wirbelstromprüfsonde nach Anspruch 5, dadurch gekennzeichnet, daß die mindestens eine Spule (10) einen rechtwinkligen, vorzugsweise quadratischen Querschnitt aufweist.

**Claims**

1. A process for examining screws using an eddy current test probe having at least one coil (10) through which high-frequency alternating current flows arranged in a body (6) of insulating material and transverse to the contact surface (7) thereof, this contact surface (7) being guided along the threads (3) of the screw (1), characterised in that for the purpose of inspecting stud bolts (1) on reactor pressure vessels the at least one coil (10) is oriented transverse to their screw threads (3) with its field sensing at least two threads (3), and in that the body (6) of insulating material is guided with its contact surface (7), which is flat or curved in one dimension to correspond to the external diameter of the threads of the stud bolt (1), above the threads (3).

2. A process according to claim 1, characterised in that the body (6) of ; insulating material is guided along generatrices along the stud bolts (1) while the stud bolts (1) are turned.

3. An eddy current test probe for examining screws having at least one coil (10) through which high-frequency alternating current flows, arranged in a body (6) of insulating material and transverse to the contact surface (7) thereof, and for carrying out the process according to claim 1 or claim 2, characterised in that the contact surface (7) of the body (6) of insulating material is curved in one dimension to correspond to the external diameter of the stud bolts (1).

4. An eddy current test probe according to claim 3, characterised in that the at least one coil (10) has a width of from 12 mm to 30 mm in the neighbourhood of the contact surface (7).

5. An eddy current test probe according to claim 3 or claim 4, characterised in that the at least one coil (10) has a substantially rectilinear section (9) in the neighbourhood of the contact surface (7).

6. An eddy current test probe according to claim 5, characterised in that the at least one coil (10) has a right-angled, preferably square section.

**Revendications**

1. Procédé pour examiner des vis à l'aide d'une sonde de contrôle à courants de Foucault possédant au moins une bobine (10) parcourue par un courant alternatif à haute fréquence et disposée dans un corps en un matériau isolant (6), transversalement par rapport à la surface d'appui (7) de ce corps, et selon lequel on déplace cette surface d'appui (7) le long des pas (3) du filetage de la vis (1), caractérisé par le fait que pour réaliser l'examen de goujons filetés (1) dans des caissons sous pression de réacteurs, au moins une bobine est orientée transversalement par rapport aux pas (3) du filetage et explore à l'aide de son champ au moins deux pas (3) du filetage et qu'on déplace le corps en matériau isolant (6) de manière que sa surface d'appui plane ou cintrée d'une manière unidirectionnelle conformément au diamètre extérieur du filetage des goujons (1), se déplace au-dessus des pas (3) du filetage.

2. Procédé selon la revendication 1, caractérisé en ce qu'on déplace le corps en matériau isolant (6) suivant des génératrices le long des goujons (3) et qu'on fait tourner ces derniers.

3. Sonde de contrôle à courant de Foucault, servant à examiner des vis comportant au moins une bobine (10) parcourue par un courant alternatif à haute fréquence et disposée dans un corps en matériau isolant (6), transversalement par rapport à la surface d'appui (7) de ce corps, et utilisable pour la mise en oeuvre du procédé suivant la revendication 1 ou 2, caractérisé par le fait que la surface d'appui (7) du corps en matériau isolant (6) est cintrée d'une manière unidimensionnelle conformément au diamètre extérieur du filetage des goujons filetés (1).

4. Sonde de contrôle à courants de Foucault suivant la revendication 3, caractérisée par le fait que la bobine (10) prévue en au moins un exemplaire possède, à proximité de la surface d'appui (7), une largeur comprise entre 12 mm et 30 mm.

5. Sonde de contrôle à courants de Foucault suivant la revendication 3 ou 4, caractérisée par le fait que la bobine (10) prévue en au moins un exemplaire possède, à proximité de la surface d'appui (7), une section sensiblement rectiligne (9).

6. Sonde de contrôle à courants de Foucault suivant. la revendication 5, caractérisée par le fait que la bobine (10) prévue au moins en un exemplaire possède une section transversale rectangulaire et de préférence carrée.

FIG 1

FIG 2